# FASCICULE DE BREVET EUROPEEN

(11) **EP 2 643 926 B1**
(45) Date de publication et mention de la délivrance du brevet: **21.11.2018**
(21) Numéro de dépôt: 11802494.2
(22) Date de dépôt: 22.11.2011
(51) Int. Cl.: B60L 7/20, H02P 3/18, H02P 3/14, B60R 16/03

(54) **PROCÉDÉ ET ARCHITECTURE DE TRAITEMENT DE L'ÉNERGIE ÉLECTRIQUE RÉGÉNÉRÉE D'UN AÉRONEF**
VERFAHREN UND ARCHITEKTUR ZUR VERARBEITUNG VON AUS EINEM FLUGZEUG REGENERIERTER ELEKTRISCHER ENERGIE
METHOD AND ARCHITECTURE FOR PROCESSING ELECTRICAL ENERGY REGENERATED FROM AN AIRCRAFT

(30) Priorité: 23.11.2010 FR 1059612
(43) Date de publication de la demande: 02.10.2013
(73) Titulaire: Safran Electrical & Power, 31702 Blagnac Cedex (FR)
(72) Inventeur: RAMBAUD, Julien, 91610 Ballancourt-sur-Essonne (FR); VIEILLARD, Sébastien, F-77720 La Chapelle Gauthier (FR)
(74) Mandataire: Gevers & Orès
(86) Numéro de dépôt international: PCT/FR2011/052724
(87) Numéro de publication internationale: WO 2012/069755

(56) Documents cités:
- EP-A2- 2 161 829
- EP-A2- 2 164 148
- JP-A- 60 187 202
- JP-A- 60 216 704
- US-A- 5 650 713
- US-A- 5 714 851
- US-A1- 2009 045 761
- US-B2- 6 850 426

## Description

### DOMAINE TECHNIQUE

L'invention concerne un procédé et une architecture destinés au traitement de l'énergie régénérée par des actionneurs électriques d'un aéronef, qui agissent en particulier lors des opérations de taxiage.

La fonction taxiage consiste à déplacer l'avion au sol à l'aide d'actionneurs électriques par exemple situés sur le train principal afin de contrôler la vitesse de l'avion en provoquant des décélérations. Ces actionneurs permettent également de freiner l'avion sur des pistes à pente négative ou dans le cas de vents arrière. Les actionneurs renvoient alors l'énergie électrique de décélération ou de freinage sur le réseau où cette énergie doit être dissipée.

### ÉTAT DE LA TECHNIQUE

Lorsque les signes du couple et de la vitesse des actionneurs sont identiques (le produit entre les deux paramètres a un signe positif), l'architecture électrique fournit de l'énergie aux actionneurs à partir d'un générateur électrique : l'architecture agit en mode nominal moteur. Le générateur électrique est entraîné par une machine thermique, en général un groupe auxiliaire de puissance, en abrégé APU (initiales de « auxiliary power unit » en terminologie anglaise).

Lorsque les signes du couple et de la vitesse sont opposés (le produit entre les deux paramètres a un signe négatif), les actionneurs sont dits « aidants » et la commande freine la charge en retirant de l'énergie aux actionneurs. L'architecture et les actionneurs agissent alors en mode générateur de l'énergie ainsi « régénérée ».

Il est nécessaire, en cas d'efforts aidants, de dissiper l'énergie régénérée au niveau des actionneurs sous peine d'une élévation rapide de la tension dans le réseau électrique pouvant mener à une rupture de tension.

Les solutions habituelles de dissipation de l'énergie sont des solutions à base de résistances permettant de « griller » l'énergie. Classiquement, cette énergie est ainsi dissipée par effet Joule dans des résistances céramiques via un hacheur de freinage ou « chopper ».

Ces solutions sont lourdes et difficiles à optimiser car elles nécessitent de connaître parfaitement l'énergie à dissiper pour convertir toute l'énergie régénérée. De plus, dans ce type de système de forte puissance, l'énergie dissipée nécessite un important volume de céramique et un convertisseur de puissance supplémentaire dédié uniquement à cette fonction freinage.

### EXPOSÉ DE L'INVENTION

L'invention vise à supprimer les inconvénients posés par les résistances de dissipation d'énergie. A cet effet, elle propose de renvoyer l'énergie vers le générateur électrique de l'architecture pour convertir cette énergie en énergie mécanique.

Plus précisément, la présente invention a pour objet un procédé de traitement d'énergie régénérée par des actionneurs électriques réversibles d'un aéronef. En mode nominal, un générateur entraîné par une machine thermique fournit de la puissance aux actionneurs fonctionnant en mode moteur via un circuit multivoies convertisseur de tension. En phase de freinage d'au moins un actionneur, une régénération d'énergie électrique est produite par le(s) actionneur(s) fonctionnant alors en mode générateur d'énergie électrique via la ou les voie(s) correspondante(s) du circuit. L'énergie régénérée est transmise au générateur en mode moteur par une transmission inverse d'énergie à partir d'au moins une voie d'actionneur(s). L'énergie ainsi transformée est transmise sous forme d'énergie mécanique à la machine thermique via le générateur piloté en mode moteur.

La transmission inverse d'énergie est réalisée par une liaison dédiée entre au moins une voie d'actionneur(s) restés en mode moteur et le générateur électrique. Alternativement, elle peut être réalisée directement par le circuit convertisseur de tension présentant une réversibilité totale de fourniture d'énergie, à partir d'au moins l'une des voies multiples.

Avantageusement, le circuit convertisseur peut être dédié à une fonction de taxiage d'avion au sol ou à une fonction de démarrage de la machine thermique. Par ailleurs, l'énergie mécanique produite par le générateur en mode moteur peut être fournie à la machine thermique et/ou à un équipement de l'aéronef (pompe, alternateur, etc.) pouvant fonctionner via des moyens d'adaptation mécanique de transfert de puissance (réducteurs, renvois, etc.).

L'invention se rapporte également à une architecture apte à mettre en oeuvre un tel procédé. Cette architecture comporte un générateur électrique réversible entraîné par une machine thermique et apte à délivrer une tension alternative, des actionneurs électriques aptes à fournir de la puissance mécanique à l'aéronef, et un circuit convertisseur de tension à liaisons multiples comportant des moyens redresseurs de tension alternative apte à convertir la tension alternative en tension continue. Des convertisseurs de puissance sont agencés sur lesdites liaisons, alimentés par la tension continue délivrée par les moyens redresseurs et aptes à piloter autant d'actionneurs électriques. Des moyens de connexion, montés en dérivation sur au moins une liaison d'au moins un convertisseur de puissance, sont aptes à permettre le pilotage du générateur via un bus barre pour former les moyens de transmission inverse d'énergie à partir de ce(s) convertisseur(s) de transmission de puissance, un bus de tension continue et les autres convertisseurs qui, non dérivés, sont fournisseurs d'énergie. Le circuit convertisseur comporte également des moyens de transmission inverse d'énergie électrique appliquée au générateur fonctionnant en mode moteur.

Les moyens redresseurs peuvent être constitués par au moins un redresseur ou un convertisseur.

Alternativement, les moyens de transmission inverse d'énergie peuvent être formés directement par le circuit convertisseur de tension à partir d'au moins l'une des voies multiples, les moyens redresseurs et convertisseurs étant réversibles. Les moyens redresseurs peuvent alors être constitués par un convertisseur réversible.

L'énergie électrique peut alors être fournie par des actionneurs en mode générateur ou par une source de tension continue pour alimenter la machine thermique en mode démarrage via le générateur électrique.

Selon des modes de réalisation particuliers :
- la source est une source de basse tension connectée aux moyens de dérivation par une inductance de suralimentation, pouvant être constituée par une batterie ou une source de tension triphasée transmise par une prise de parc et convertie en tension continue par un redresseur ;
- les moyens redresseurs sont choisis entre au moins un redresseur et un convertisseur réversible et sont couplé(s) à un bus de tension continu d'alimentation des actionneurs via les convertisseurs ;
- les convertisseurs sont choisis parmi des onduleurs et des ponts en H ;
- les moyens de connexion sont choisis parmi des contacteurs, des commutateurs et des bascules électroniques;
- la machine thermique est un groupe auxiliaire de puissance ou équivalent dédié au démarrage des moteurs principaux de l'aéronef et à la suppléance de ces moteurs en cas de défaillance.

### BRÈVE DESCRIPTION DES FIGURES

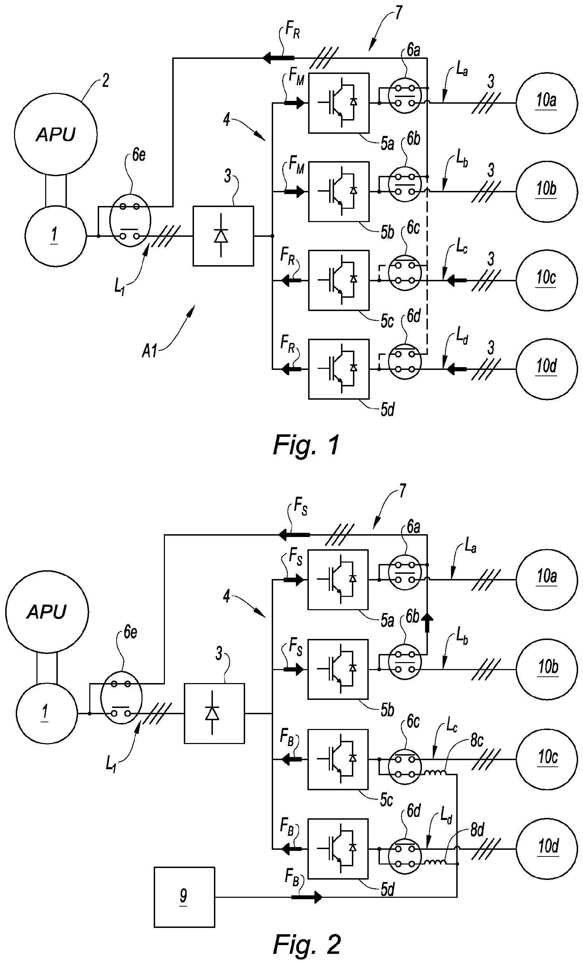

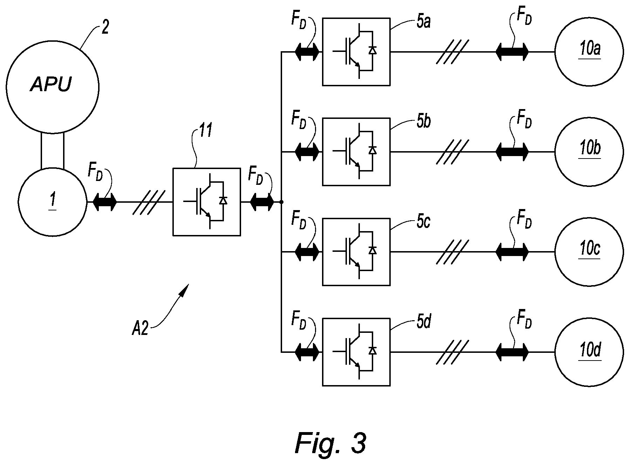

D'autres aspects, caractéristiques et avantages de l'invention apparaîtront dans la description non limitative qui suit, relative à des modes de réalisation particuliers, en référence aux dessins annexés qui représentent, respectivement :
- en figure 1, un schéma d'architecture destiné au traitement de l'énergie régénérée selon l'invention comportant un bus dédié pour la transmission inverse d'énergie ;
- en figure 2, un schéma d'architecture selon la figure 1 dans le cas d'une utilisation en mode démarrage d'un APU à partir d'une source de tension constituée par une batterie, et
- en figure 3, un schéma d'architecture alternative comportant un convertisseur réversible pour la transmission inverse d'énergie.

### EXPOSÉ DETAILLÉ DE MODES DE RÉALISATION

En référence au schéma de la figure 1, l'architecture A1 en vue d'un traitement de l'énergie régénérée fournie par quatre moteurs électriques 10a à 10d, utilisés comme actionneurs dans la fonction de taxiage, comporte :
- un générateur électrique 1 entrainé par un APU 2 comme source auxiliaire thermique et délivrant une tension alternative triphasée (de symbole ///) ;
- un redresseur passif à diodes 3 agencé à la sortie du générateur 1 sur une liaison L1 pour la conversion de cette tension triphasée en tension continu « DC » transmise à l'entrée d'un bus 4;
- un bus 4 de tension « DC » (initiales de « direct current », c'est-à-dire courant continu en terminologie anglaise) pour alimenter chacun des quatre moteurs 10a à 10d en mode nominal via un onduleur 5a à 5d correspondant, ces onduleurs étant des convertisseurs de puissance réversibles pour piloter en tension triphasée le moteur correspondant sur une liaison électrique La à Ld ;
- un jeu de doubles contacteurs 6a à 6d aménagé dans chacune de ces liaisons La à Ld entre onduleur et moteur correspondant, permettant de configurer chaque liaison selon deux modes de fonctionnement des moteurs 10a à 10d : un mode moteur (flèches F_{M}) correspondant au mode nominal pour la fonction taxiage et un mode générateur (flèches F_{R}) correspondant au mode d'énergie régénérée ;
- un bus barre 7 dédié à la mise en oeuvre, en mode générateur, de reconnections électriques vers le générateur 1 via les contacteurs 6a à 6d.

En mode régénéré, au moins un onduleur, deux onduleurs 5c et 5d dans l'exemple illustré, est utilisé pour assurer le freinage et renvoyer (flèche F_{R}) une énergie sur le bus de tension DC 4 par l'intermédiaire des onduleurs correspondants 5c et 5d.

Cette énergie récupérée au niveau du bus de tension DC 4 est alors renvoyée au générateur électrique 1 en utilisant le ou les onduleurs restants, les deux onduleurs 5a et 5b dans l'exemple illustré, et le bus barre dédié 7. Ces onduleurs restants sont alors déconnectés de leurs moteurs respectifs 10a et 10b par les contacteurs 6a et 6b configurés en mode régénéré. De même, le générateur 1 est déconnecté du redresseur 3 et connecté au bus dédié 7 via un contacteur 6e. Le générateur 1 et les deux onduleurs restants 5a et 5b sont ainsi connectés ensemble via le bus barre dédié 7.

Les onduleurs restants sont alors à-même de piloter le générateur électrique 1 en mode moteur et de convertir l'énergie électrique en énergie mécanique au niveau de l'APU 2. Avantageusement, l'énergie est ainsi renvoyée sans l'ajout de convertisseur supplémentaire. Typiquement, une puissance d'environ 40 kW peut être fournie à l'APU.

La configuration de l'architecture A1 selon la figure 1 en mode régénéré peut également être utilisée en mode démarrage de l'APU 2, comme illustré en figure 2.

Le démarrage de l'APU se fait en utilisant le générateur 1 comme démarreur (« starter » en terminologie anglaise), c'est-à-dire en mode « moteur » en lui fournissant de l'énergie. Il est en effet possible de démarrer un générateur tel que le générateur 1 à partir d'une basse tension continue.

Pour ce faire, les sorties d'au moins un onduleur, deux onduleurs 5c et 5d dans l'exemple illustré, sont avantageusement connectés sur les liaisons Lc et Ld - entre l'onduleur et le contacteur correspondant - par l'intermédiaire d'inductances suralimentées 8c et 8d (encore appelées « selfs de boost » à partir de termes de langue anglaise) à une source de basse tension continu, ici une batterie 9.

Ces onduleurs 5c et 5d sont alors pilotés en mode boost pour élever la basse tension continue de la batterie 9 en une tension continue exploitable sur le bus de tension DC 4 (flèches F_{B}). Les onduleurs restants 5a et 5b pilotent alors (flèches F_{S}) le générateur 1 en mode starter à partir de la tension ainsi créée via le bus barre dédié 7, de manière analogue au fonctionnement en mode régénéré selon la figure 1.

Les deux onduleurs 5c et 5d sont bien entendu déconnectés de leurs moteurs respectifs 10c et 10d par les contacteurs 6c et 6d, et connectés par ces mêmes contacteurs à la batterie basse tension continue 9 via les selfs de boost 8c et 8d. La batterie est une batterie de 28V équipant l'avion. Alternativement, la tension peut provenir d'une prise de parc du tarmac reliée à un réseau de 3x115V converti en 28V.

Une architecture alternative A2 est maintenant présentée en référence à la figure 3. Cette architecture A2 comporte un convertisseur réversible 11 - ici un onduleur - à la place du redresseur passif 3, permettant alors de s'affranchir de contacteurs et du bus barre dédié 7.

Ainsi, le convertisseur réversible 11 permet le passage de l'énergie du générateur 1 vers les moteurs électriques 10a à 10d en mode nominal. Ce convertisseur 11 permet également le renvoi d'énergie et le pilotage en mode moteur du générateur 1 en phase de régénération d'énergie (double flèche F_{D}). Il permet aussi le démarrage de l'APU 2 en utilisant les contacteurs, les selfs de boost et la source de tension continue selon la figure 2.

L'invention n'est pas limitée aux exemples décrits et représentés. Il est par exemple possible d'utiliser tout type de contacteur commutable (commutateur, sélecteur, bascule, etc.) ou composants de puissance actifs (IGBT, MOS, Diode, thyristors etc.), de convertisseur (onduleur, pont en H, etc.) et de redresseur (diodes, thyristors, etc.) éventuellement couplé à un filtre. Par ailleurs, tout système de distribution électrique approprié peut être utilisé à la place des bus DC et les bus barres décrits ci-dessus.

## Revendications

1. Procédé de traitement d'énergie régénérée par des actionneurs électriques réversibles (10a à 10d) d'un aéronef, dans lequel, en mode nominal, un générateur (1) entraîné par une machine thermique (2) fournit de la puissance aux actionneurs (10a à 10d) fonctionnant en mode moteur (F_{M}) via un circuit (L₁-4 - Lₐ à L_{d}) multivoies convertisseur de tension (5a à 5d), **caractérisé en ce que**, en phase de freinage d'au moins un actionneur (10c, 10d), une régénération d'énergie électrique est produite par le(s) actionneur(s) (10c, 10d) fonctionnant alors en mode générateur d'énergie électrique via la ou les voie(s) correspondante(s) (Lₐ à L_{d}) du circuit, **en ce que** l'énergie régénérée est transmise au générateur (1) en mode moteur par une transmission inverse d'énergie (F_{R}) à partir d'au moins une voie (L_{c}, L_{d}) d'actionneur(s) (10_{c}, 10_{d}) par une liaison dédiée (7) entre au moins une voie d'actionneur(s) restés en mode moteur (La, Lb) et le générateur électrique (1), et **en ce que** l'énergie ainsi transmise est transformée en énergie mécanique par la machine thermique (2) via le générateur (1) en mode moteur.

2. Procédé de traitement selon l'une quelconque des revendications précédentes, dans lequel le circuit multivoies convertisseur (L₁- 4 - Lₐ à L_{d}) est dédié à une fonction de taxiage d'avion au sol et à une fonction de démarrage de la machine thermique (2).

3. Procédé de traitement selon l'une quelconque des revendications précédentes, dans lequel l'énergie mécanique produite par le générateur (1) en mode moteur est fournie à la machine thermique (2) et/ou à un équipement de l'aéronef pouvant fonctionner via des moyens d'adaptation mécanique de transfert de puissance.

4. Architecture apte à mettre en oeuvre le procédé de traitement selon l'une quelconque des revendications précédentes, **caractérisée en ce qu'**elle comporte un générateur électrique réversible (1) entraîné par une machine thermique (2) et apte à délivrer une tension alternative, des actionneurs électriques (10a à 10d) aptes à fournir de la puissance à l'aéronef, et un circuit convertisseur de tension (L₁ - 4) à liaisons multiples (Lₐ à L_{d}) comportant des moyens redresseurs de tension alternative (3, 11) apte à convertir la tension alternative en tension continue, et des convertisseurs de puissance (5a à 5d) agencés sur lesdites liaisons multiples (Lₐ à L_{d}), alimentés par la tension continue délivrée par les moyens redresseurs (3, 11) et aptes à piloter autant d'actionneurs électriques (10a à 10d), des moyens de connexion (6a à 6d) montés en dérivation sur au moins une liaison (Lₐ à L_{d}) d'au moins un convertisseur de puissance (5a à 5d) sont aptes à permettre le pilotage du générateur (1) via un bus barre (7) pour former les moyens de transmission inverse d'énergie (F_{R}) à partir de ce(s) convertisseur(s) de transmission de puissance (5a, 5b), un bus de tension continue (4) et les autres convertisseurs (5c, 5d) qui, non dérivés, sont fournisseurs d'énergie, et **en ce que** le circuit convertisseur comporte également des moyens (7, 11) de transmission inverse d'énergie électrique appliquée au générateur (1) fonctionnant en mode moteur.

5. Architecture selon la revendication précédente, dans laquelle les moyens redresseurs sont constitués par au moins un redresseur (3) ou un convertisseur (11).

6. Architecture selon l'une des revendications 4 ou 5, dans laquelle l'énergie électrique est fournie par des actionneurs (10c, 10d) en mode générateur.

7. Architecture selon l'une quelconque des revendications 4 à 6, dans laquelle l'énergie électrique est fournie par une source de tension continue (9) pour alimenter la machine thermique (2) en mode démarrage via le générateur électrique (1).

8. Architecture selon la revendication précédente, dans laquelle la source (9) est une source de basse tension connectée aux moyen de connexion (6c, 6d) par une inductance de suralimentation (8c, 8d), pouvant être constituée par une batterie ou une source de tension triphasée transmise par une prise de parc et convertie en tension continue par un redresseur.

9. Architecture selon l'une quelconque des revendications 4 à 8, dans laquelle la machine thermique (2) est un groupe auxiliaire de puissance ou équivalent dédié au démarrage des moteurs principaux de l'aéronef et à la suppléance de ces moteurs en cas de défaillance.

## Patentansprüche

1. Verfahren zur Verarbeitung von durch reversible elektrische Aktuatoren (10a bis 10d) eines Luftfahrzeugs regenerierter Energie, wobei im Normalbetrieb ein durch eine Wärmemaschine (2) angetriebener Generator (1) den Aktuatoren (10a bis 10d), die im Motorbetrieb (F_{M}) arbeiten, über einen Mehrweg-Spannungswandler (5a bis 5d)-Kreislauf (L₁ - 4 - Lₐ bis L_{d}) Leistung liefert, **dadurch gekennzeichnet, dass** bei einer Bremsphase mindestens eines Aktuators (10c, 10d) durch den (die) Aktuator(en) (10c, 10d), der (die) dann im Generatorbetrieb für elektrische Energie arbeitet (arbeiten), über den oder die entsprechenden Weg(e) (Lₐ bis L_{d}) des Kreislaufs eine Regeneration elektrischer Energie erfolgt, dadurch, dass ausgehend von mindestens einem Weg (L_{c}, L_{d}) eines (von) Aktuators (Aktuatoren) (10_{c}, 10_{d}) durch eine dafür vorgesehene Verbindung (7) zwischen mindestens einem Weg eines (von) Aktuators (Aktuatoren), die im Motorbetrieb (La, Lb) verblieben sind, und dem elektrischen Generator (1) die regenerierte Energie an den Generator (1) im Motorbetrieb über eine umgekehrte Energieübertragung (F_{R}) übertragen wird, und dadurch, dass die so übertragene Energie durch die Wärmemaschine (2) über einen Generator (1) im Motorbetrieb in mechanische Energie verwandelt wird.

2. Verfahren zur Verarbeitung nach einem der vorstehenden Ansprüche, wobei der Mehrweg-Wandler-Kreislauf (L₁- 4 - Lₐ bis L_{d}) für eine Rollfunktion eines Flugzeugs am Boden und für eine Startfunktion der Wärmemaschine (2) vorgesehen ist.

3. Verfahren zur Verarbeitung nach einem der vorstehenden Ansprüche, wobei die durch den Generator (1) im Motorbetrieb erfolgte mechanische Energie an die Wärmemaschine (2) und/oder eine Ausrüstung des Luftfahrzeugs, die anhand mechanischer Anpassungsmittel zur Leistungsübertragung arbeiten kann, geliefert wird.

4. Architektur, die geeignet ist, das Verfahren zur Verarbeitung nach einem der vorstehenden Ansprüche umzusetzen, **dadurch gekennzeichnet, dass** sie einen reversiblen elektrischen Generator (1) aufweist, der durch eine Wärmemaschine (2) angetrieben wird und geeignet ist, eine Wechselspannung bereitzustellen, elektrische Aktuatoren (10a bis 10d), die geeignet sind, dem Luftfahrzeug Leistung zu liefern, und einen Spannungswandler-Kreislauf (L₁ - 4) mit mehreren Verbindungen (Lₐ bis L_{d}), der Wechselspannung-Gleichrichter-Mittel (3, 11) aufweist, der geeignet ist, die Wechselspannung in Gleichspannung umzuwandeln, und Leistungswandler (5a bis 5d), die auf den mehreren Verbindungen (Lₐ bis L_{d}) angeordnet sind, mit der Gleichspannung, die durch die Gleichrichter-Mittel (3, 11) bereitgestellt wird, versorgt werden, und die geeignet sind, ebenso viele elektrische Aktuatoren (10a bis 10d) zu steuern, Verbindungsmittel (6a bis 6d), die verzweigt an mindestens einer Verbindung (Lₐ bis L_{d}) von mindestens einem Leistungswandler (5a bis 5d) angeordnet sind, die geeignet sind, die Steuerung des Generators (1) über eine Stromschiene (7) zu ermöglichen, um ausgehend von diesem (diesen) Leistungsübertragungswandler(n) (5a, 5b) umgekehrte Energieübertragungsmittel (F_{R}) zu bilden, eine Gleichspannungsschiene (4) und die anderen Wandler (5c, 5d), die, nicht umgeleitet, Energielieferanten sind, und dadurch, dass der Wandler-Kreislauf ebenfalls Mittel (7, 11) zur Übertragung umgekehrter elektrischer Energie aufweist, die auf den im Motorbetrieb arbeitenden Generator (1) angewendet werden.

5. Architektur nach dem vorstehenden Anspruch, wobei die Gleichrichter-Mittel aus mindestens einem Gleichrichter (3) oder einem Wandler (11) bestehen.

6. Architektur nach einem der Ansprüche 4 oder 5, wobei die elektrische Energie durch Aktuatoren (10c, 10d) im Generatorbetrieb geliefert wird.

7. Architektur nach einem der Ansprüche 4 bis 6, wobei die elektrische Energie durch eine Gleichspannungsquelle (9) geliefert wird, um die Wärmemaschine (2) im Startbetrieb über den elektrischen Generator (1) zu versorgen.

8. Architektur nach dem vorstehenden Anspruch, wobei die Quelle (9) eine Niederspannungsquelle ist, die an die Anschlussmittel (6c, 6d) durch eine Ladeinduktivität (8c, 8d) angeschlossen ist, die aus einer Batterie oder einer dreiphasigen Spannungsquelle, die über eine Flugparksteckverbindung übertragen, und durch einen Gleichrichter in Gleichstrom umgewandelt wird, bestehen kann.

9. Architektur nach einem der Ansprüche 4 bis 8, wobei die Wärmemaschine (2) eine Leistungs-Hilfsgruppe oder ein Äquivalent dazu ist, die oder das für den Start der Hauptmotoren des Luftfahrzeugs und den Ersatz dieser Motoren im Falle eines Ausfalls vorgesehen ist.

## Claims

1. A processing method for the energy regenerated by reversible electrical actuators (10a to 10d) of an aircraft, wherein, in a nominal mode, a generator (1) driven by a thermal machine (2) supplies power to the actuators (10a to 10d) operating in a motive mode (F_{M}) via a voltage converting (5a to 5d) multi-way circuit (L₁, - 4 - Lₐ to L_{d}), **characterized in that**, in a braking phase of at least one actuator (10c, 10d), an electrical energy regeneration is produced by the actuator(s) (10c, 10d) then operating in an electrical energy generating mode via the corresponding link(s) (Lₐ to L_{d}) of the circuit, **in that** the regenerated energy is transmitted to the generator (1) in a motive mode through a reverse energy transmission (F_{R}) from at least one way (L_{c}, L_{d}) of actuator(s) (10_{c}, 10_{d}) through a dedicated link (7) between at least one way of actuator(s) remained in a motive mode (Lₐ, L_{b}) and the electrical generator (1), and **in that** the so-transmitted energy is converted into mechanical energy by the thermal machine (2) via the generator (1) being in a motive mode.

2. The processing method according to any of preceding claims, wherein the multi-way converting circuit (L₁- 4 - Lₐ to L_{d}) is dedicated either to a taxiing function of an aircraft on the ground or to a starting function for the thermal machine (2).

3. The processing method according to any of preceding claims, wherein the mechanical energy produced by the generator (1) in a motive mode is supplied to the thermal machine (2) and/or to an equipment of the aircraft being able to operate via power transfer mechanical adaptation means.

4. An architecture able to implement the processing method according to any of preceding claims, **characterized in that** it comprises a reversible electrical generator (1) being driven by a thermal machine (2) and able to deliver an alternative voltage, electrical actuators (10a to 10d) able to supply power to the aircraft, and a multi-link (Lₐ to L_{d}) voltage converting circuit (L₁, - 4) comprising alternative voltage rectifying means (3, 11) able to convert the alternative voltage into a direct voltage, and power converters (5a, 5d) arranged on said multiple links (Lₐ to L_{d}), being supplied by the direct voltage emitted by the rectifying means (3, 11) and able to pilot as many electrical actuators (10a, 10d), connecting means (6a to 6d), being mounted in bypass on at least one link (Lₐ to L_{d}) of at least one power converter (5a to 5d), are able to allow the generator (1) to be piloted via a busbar (7) so as to form the reverse energy transmission means (F_{R}) from this or these power transmission converters (5a, 5b), a direct voltage bus (4) and the other converters (5c, 5d) that, being not bypassed, are energy suppliers, and **in that** the converting circuit also comprises reverse electrical energy transmission means (7, 11) applied to the generator (1) operating in a motive mode.

5. The architecture according to preceding claim, wherein the rectifying means consist in at least one rectifier (3) or one converter (11).

6. The architecture according to any of claims 4 or 5, wherein the electrical energy is supplied by actuators (10c, 10d) in a generating mode.

7. The architecture according to any of claims 4 to 6, wherein the electrical energy is supplied by a direct voltage source (9) so as to supply the thermal machine (2) in a starting mode via the electrical generator (1).

8. The architecture according to preceding claim, wherein the source (9) is a low voltage source connected to the connecting means (6c, 6d) through an over-supplying inductor (8c, 8d), that could be formed by a battery or a three-phase voltage source transmitted by a ground plug and converted into a direct voltage by a rectifier.

9. The architecture according to any of claims 4 to 8, wherein the thermal machine (2) is an auxiliary power unit or equivalent dedicated to the starting of the main engines of the aircraft and to the substitution of such engines in the case of a failure.
